# EUROPEAN PATENT SPECIFICATION

(11) **EP 4 068 038 B1**
(45) Date of publication and mention of the grant of the patent: **01.05.2024**
(21) Application number: 21166431.3
(22) Date of filing: 31.03.2021
(51) Int. Cl.: G05D 1/02

(54) **REFERENCING SAFETY ZONES TO OTHER EQUIPMENT**
REFERENZIERUNG VON SICHERHEITSZONEN ZU ANDERER AUSRÜSTUNG
RENVOI DE ZONES DE SÉCURITÉ À UN AUTRE ÉQUIPEMENT

(43) Date of publication of application: 05.10.2022
(73) Proprietor: Mobile Industrial Robots A/S, 5220 Odense SØ (DK)
(72) Inventor: AAKÆR IVERSEN, Jeppe, 5000 Odense C (DK); JØRGENSEN, Claus, 5230 Odense M (DK)
(74) Representative: Fish & Richardson P.C.

(56) References cited:
- US-A1- 2015 049 911
- US-A1- 2019 161 274
- US-A1- 2020 334 899

## Description

### TECHNICAL FIELD

This disclosure relates to ensuring the safe operation of autonomous mobile robots, and more particularly to safety fields for autonomous mobile robots that are referenced to equipment other than the autonomous mobile robot itself.

### BACKGROUND

Mobile robots are robots that are capable of moving in their surroundings. Mobile robots have become more commonplace in a variety of settings. For example, hospitals use autonomous mobile robots to move materials. Warehouses have installed mobile robotic systems to efficiently move materials from stocking shelves to order fulfillment zones. Mobile robots are also used in industrial, military and security settings.

US 2020/0334899 describes systems and methods for identifying a workpiece in a processing environment may utilize one or more sensors for digitally recording visual information and providing that information to an industrial workflow. The sensor(s) may be positioned to record at least one image of the workpiece at a location where a specified position and orientation thereof is required. A processor may determine, from the recorded image(s) and a stored digital model, whether the workpiece conforms to the specified position and orientation. US 2015/049911 A1 is also a relevant document of the prior art in view of the invention.

### SUMMARY

Methods, systems, and non-transitory machine-readable media encoding instructions for ensuring the safe operation of autonomous mobile robots are described.

For example, in one aspect, a method performed by an autonomous mobile robot is defined in claim 1.

In another aspect, an autonomous mobile robot is defined in claim 2.

These and other aspects can include one or more of the following features. At least a portion of a protective field of the autonomous mobile robot can be disengaged prior to performing an operation on the workpiece such that the workpiece does not trigger the protective field. The size of the disengaged portion of the protective field can change as the autonomous mobile robot approaches the workpiece. The autonomous mobile robot can include a control unit that includes a memory that stores a plurality of different definitions of safety fields. The different definitions are defined for different workpieces. The memory can store a plurality of different definitions of safety fields for a first of the different workpieces. The safety field can include one or more cutouts defined to accommodate the geometry of the workpiece so that the workpiece itself does not trigger the safety response. The safety field can include one or more cutouts defined to accommodate presence of unspecified objects at positions near or around the workpiece. The safety response can be a stop to motion of the autonomous mobile robot. The safety response can be a visual or audible alarm. The safety response can be a visual or audible warning. In operating on the workpiece, the autonomous mobile robot can move toward the workpiece. A size of the safety field can depend upon a position of the workpiece in a facility. An orientation of the safety field can be referenced to an orientation of the workpiece.

The details of one or more implementations are set forth in the accompanying drawings and the description below. Other features, objects, and advantages will be apparent from the description and drawings, and from the claims.

### DESCRIPTION OF DRAWINGS

FIG. 1 is a schematic representation of a top-down view of an example autonomous mobile robot.
FIGS. 2-3 schematically represent the implementation of protective field safety procedures by an autonomous mobile robot at two different points in time in a facility.
FIGS. 4-7 schematically represent an implementation of safety procedures by an autonomous mobile robot at different points in time.

Like reference symbols in the various drawings indicate like elements.

### DETAILED DESCRIPTION

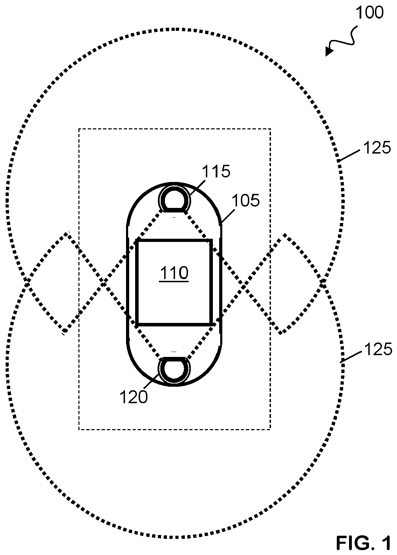

FIG. 1 is a schematic representation of a top-down view of an example autonomous mobile robot, namely, AMR 100. Autonomous mobile robots are mobile machines that can move to perform actions in accordance with programmed instructions. Autonomous mobile robots are autonomous in that they are capable of governing the performance of the programmed instructions independently. In other words, real-time control of operations by an external human or other operator is unnecessary for many work-day actions. These autonomous operations can include defined actions (e.g., manufacturing products, transporting goods and materials, moving carts, cleaning, surveillance, disinfection, etc.) as well as actions that are responsive to transient circumstances (e.g., identifying the position of movable obstacles and objects, including other of autonomous mobile robots, responding to alarms or safety conditions, and the like). The instructions are generally stored within the autonomous mobile robots themselves. However, in some implementations, instructions can be stored externally to the autonomous mobile robots and transmitted to the autonomous mobile robots as needed.

The schematic representation of AMR 100 includes a body 105, a loading surface 110, and one or more sensors 115, 120. Body 105 provides a framework for the other components of AMR 100 and is configured to support the weight of relevant workpiece(s) of AMR 100. Loading surface 110 is configured for contact with the relevant workpiece(s) when AMR is loaded. In the illustrated schematic, loading surface 110 is shown as a generally flat area upon which, e.g., a cart can mount. The design of loading surface 110 is generally tailored to relevant operation and workpiece(s) of the autonomous mobile robot. For example, the forks of a forklift, a shelf of a material lift, or the end effector of a robotic arm all include respective loading surfaces. Sensor(s) 115 are one or more devices that can detect aspects of the environment in the vicinity of AMR 100 and produce a signal representative of the detected aspects. Example sensors include cameras and scanners (e.g., LIDAR scanning systems).

AMR 100 also includes other components that contribute to its operations but are not detailed in the schematic representation. Examples include:
- wheels, castors, tracks, rollers or other components that both support a robot and allow it to move along the relevant surface(s);
- a power source such as, e.g., a battery or fuel,
- a motor or other mechanism for converting power into motion, and
- a control unit.
The control unit will generally include both hardware and software components that interoperate to control the performance of operations. The hardware components can include control circuitry, data processor(s), and data storage. Either analog or digital processing can be performed. The stored information can include machine-readable instructions for performing operations as well as data relevant to the performance of those operations. Examples of relevant data can include, e.g., an electronic map for navigation, the shape of various workpieces, and-as discussed further below-the size and shape of workpiece-referenced safety zones for the different workpieces.

Returning to the schematic representation, AMR 100 includes two sensors 115, 120. Sensors 115, 120 are positioned at opposite sides of AMR 100 and can sense the environment over a respective field of view around AMR 100. Depending on the particular construction of AMR, the number and position of sensors can change. For example, an AMR that is generally rectangular when viewed from above may have two sensors (at opposite corners) or four sensors (one at each corner). In some cases, the field of view of sensors like sensors 115, 120 may be limited in some way. For example, another portion of AMR 100 can obstruct the field of view of a sensor that is mounted in a fixed position on AMR 100 or the sensors themselves can be designed with a field of view that covers less than 360 degrees. Moreover, under certain operational conditions, the field of view of sensors 115, 120 can be transiently limited. For example, as AMR 100 passes near to an object, the object may obstruct the field of view of a sensor. As another example, a workpiece of AMR 100 may obstruct the field of view of a sensor during operation. For example, if AMR 100 is designed to mount a cart on loading surface 110, the legs of the cart will generally obstruct sensors 115, 120.

In some implementations, sensors 115, 120 can be implemented as optical sensors that scan the environment in two-dimensions with infrared lasers. For example, a rotating mirror can direct a series of IR pulses radially around the sensor with a defined angular resolution (e.g., between 0.1 and 1 degree). The higher the angular resolution, the higher the spatial resolution of the sensing. The round-trip delay for reflected pulses in the different directions can be measured and the positions of and distances to surrounding objects calculated. An example of such sensors is the S300 Safety Laser Scanner produced by Sick AG (Waldkirch, Germany).

The control unit of AMR 100 can implement various safety procedures based on the data provided by sensors 115, 120. At least some of the safety procedures can rely upon one or more areas or volumes (aka "fields" and "field sets" or "zones" and "zone sets") that are defined around the AMR and referenced to the AMR. When an object is present in the area or volume, the control unit will trigger a safety response. For example, an AMR can respond to the presence of an object within a "protective field" by stopping all motion or even shutting down. In some implementations, the stop can be a hard stop that is implemented as quickly as current conditions-including the velocity, mass, and position of the components of the AMR that happen to be in motion at the time- allow. As another example, an AMR can respond to the presence of an object within a "warning field" by slowing down or even stopping motion or a subset of motions. In some implementations, this can be implemented as a soft stop that is slower than a hard stop and reduces wear on the brakes and other components of the AMR. Warning fields are larger in dimension than protective fields.

Responses to the presence of an object within either a protective or warning field can also include, e.g., a visual or audible alarm or warning to indicate to an individual that the object is present.

In the schematic representation of FIG. 1, a single two-dimensional protective field 125 is defined around AMR 100. In particular, protective field 125 encompasses an area that extends radially outward from each of sensors 115, 120 within the field of view of the sensor. In some implementations, the radius of protective field 125 can be, e.g., on the order of 1-3 meters. For a warning field, the radius can be, e.g., on the order of 2-5 meters. However, as discussed above, the fields can be tailored in a variety of different ways. Not only can the dimensions of the field be tailored, but also:
- the number of fields (e.g., two or more warning fields can be defined);
- the orientation of the fields (e.g., planar fields can be oriented in different directions);
- the response to incursions into the fields; and
- the symmetry of the fields (e.g., a front-facing field can be larger than a rear-facing field);
can be tailored to the particular operational context.

Please note that the range of sensors 115, 120 will generally be much larger than the dimensions of the defined field(s). For example, sensors 115, 120 may have ranges of several 10's of meters (between 10-50 meters), albeit at decreasing resolution as one moves away from the sensor.

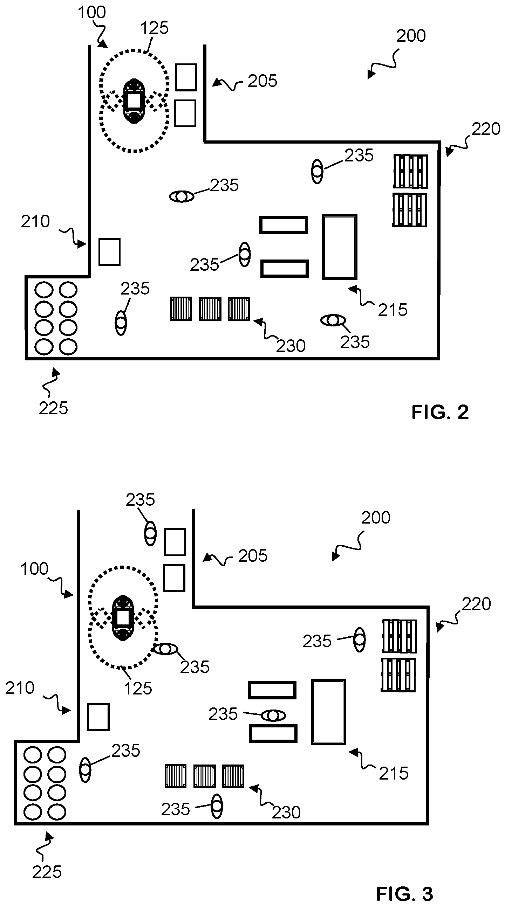

FIGS. 2-3 schematically represent the implementation of protective field safety procedures by AMR 100 at two different points in time in a facility 200. Facility 200 can be, e.g., a factory, an office, a hospital, or other site in which autonomous mobile robots are used to perform various operations. Facility 200 can include both relatively fixed equipment 205, 210, 215 and various movable elements that can serve as workpieces for AMR 100. Depending on the nature of facility 200, fixed equipment 205, 210, 215 can be manufacturing equipment, medical equipment, test equipment, or the like. Movable elements can be, e.g., pallets 220, barrels 225, carts 230, or the like. Also, individuals 235 may move to different positions within facility 200 during workday operations in facility 200.

At the point of time illustrated in FIG. 2, AMR 100 is navigating within a portion of facility 200. Protective field 125 is clear, i.e., the walls of facility 200, equipment 205, 210, 215, movable components 220, 225, 230, and individuals 235 are all outside of protective field 125. In contrast, at the point of time illustrated in FIG. 3, an individual 235 has begun to intrude into protective field 125. In response to detecting the intrusion, AMR 100 can stop all motion or even shut down.

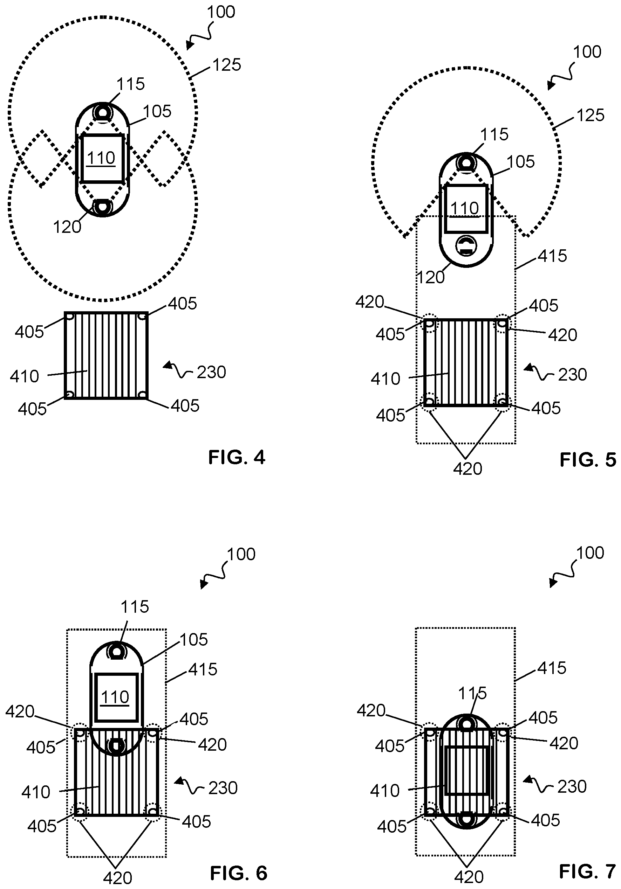

FIGS. 4-7 schematically represent an implementation of safety procedures by AMR 100 at different points in time. The illustrated safety procedures are implemented during docking with a workpiece, namely, with a cart 230. In order to dock with a workpiece, at least a portion of the protective field safety procedures are disabled. In particular, for AMR 100 to dock with cart 230, AMR 100 must be able to come into contact with cart 230. Despite disabling a portion of the protective field, AMR 100 can nevertheless maintain safe operations by defining a new field, namely, workpiece-referenced safety field-during docking.

The illustrated implementation of cart 230 includes four legs 405 that support a top 410. Legs can include wheels or castors that contact the floor. Top 410 includes a bottom surface configured to dock with loading surface 110 of AMR 100 and a top surface for holding other components. Top 410 is illustrated as a wire frame and, in some implementations, can include sidewalls and form a basket. Cart 230 can also include active or passive labels that assist with recognition by AMR 100, including bar codes, RFID tags, or other distinguishing labels.

At the point of time illustrated in FIG. 4, AMR 100 is navigating toward cart 230 with an appropriate orientation for docking. Using sensor measurements from the regions that outside protective field 125, AMR 100 can recognize cart 230 and its orientation and-so long as protective field 125 remains clear-navigate accordingly. In some implementations, a label on cart 230 may facilitate AMR 100 in identifying and/or determining the orientation of cart 230. In general, AMR 100 will begin slowing as protective field 125 approaches cart 230. This can avoid unnecessary wear and tear on AMR 100.

At the point of time illustrated in FIG. 5, AMR 100 has both implemented a new workpiece-referenced safety field 415 and disabled at least a portion of protective field 125.

Workpiece-referenced safety field 415 is an area or a volume that is referenced to the workpiece with which AMR 100 is working. Here, the workpiece is cart 230. AMR 100 is working with cart 230 by docking with it. Safety field 415 is referenced to cart 230 in that the position of safety field 415 is defined with respect to the position of cart 230. Thus, unlike protective field 125 which moves with AMR 100, safety field 415 will remain stationary so long as cart 230 remains stationary, even as AMR 100 moves. In general, the orientation of workpiece-referenced safety field 415 will also be defined with respect to the orientation of cart 230 or other workpiece. In other words, workpiece-referenced safety fields will generally not be circular or spherical and will have an orientation that is defined with respect to the orientation of cart 230. By defining a workpiece-referenced safety field 415, AMR 110 can balance the need to disable at least a portion of protective field 125 while still avoiding harm to, e.g., an individual who is close to the workpiece with which AMR 100 is working. In general, workpiece-referenced safety fields can extend approximately an arm's length beyond the outer boundary of a workpiece.

Workpiece-referenced safety fields like field 415 are generally tailored to accommodate the geometry of the workpiece so that the workpiece itself does not trigger a safety response. In more detail, fields like protective field 125 are generally continuous in that the presence of an object anywhere in the field triggers a response. In contrast, workpiece-referenced safety fields accommodate the geometry of the workpiece to avoid being triggered by the workpiece itself. In the illustrated implementation, this accommodation is achieved using a collection of generally circular cutouts 420 that are defined within field 415 at the positions of legs 405 of cart 230. The presence of an object-including legs 405- within cutouts 420 does not trigger a safety response.

In some implementations, workpiece-referenced safety fields can also be tailored to accommodate the presence of unspecified objects at certain positions near or around the workpiece. For example, a workpiece-referenced safety field for a pallet may include both:
- cutouts that are defined at the positions of parts of the pallet, and
- cutout that are defined at the expected position of goods loaded on the pallet. The cutouts that are defined at the positions of parts of the pallet prevent the safety response from being triggered by the pallet itself. The cutouts that are defined at the expected location of goods prevent the safety response from being triggered by any such goods-regardless of whether the goods are present or not.

As discussed further below, safety field 415 can be defined in a number of different ways. For example, in some implementations, AMR 100 can store a collection of different predefined safety fields for different workpieces. In some implementations, a user may be able to define a safety field. In other implementations, the providers of workpieces may offer safety fields to their customers. In some implementations, more than one safety field 415 may be defined for the same workpiece. For example, the dimensions of a workpiece-specific safety field may depend upon the location of the workpiece. For example, if the workpiece is positioned adjacent to a wall, a workpiece-referenced safety field 415 can end between the workpiece and the wall, relatively close to the outer dimensions of the workpiece. On the other hand, if the workpiece is positioned in an open area, a workpiece-referenced safety field 415 can extend relatively further beyond the workpiece. Referring briefly to FIG. 3, a relatively larger workpiece-referenced safety field 415 could detect intrusion of an individual 230 into the space between a cart 230 and the wall to protect against, e.g., AMR 100 inadvertently striking cart 230 and driving the cart into the individual.

In the illustrated implementation, the disabled portion of protective field 125 corresponds to the entire field of view of sensor 120. In other implementations, the disabled portion only subtends a portion of the field of view of sensor 120. By disabling a portion of protective field 125, AMR 100 is able to approach cart 230 for docking without, e.g., legs 405 of cart 230 triggering a safety response. In some implementations, the disabled portion changes in size as AMR 110 and protective field 125 approach cart 230 to maintain as large a protective field 125 as possible for a given position of AMR 110 but yet prevent cart 230 from intruding into an active portion of protective field 125.

For example, at the point of time illustrated in FIG. 6, AMR 100 has disabled yet a larger portion of protective field 125. Indeed, in the illustrated implementation, the entirety of protective field 125 has been disabled. In other implementations, some portion of protective field 125 can remain active (e.g., the portion of protective field that is directed upwards in the illustrated orientation). By disabling ever larger portions of protective field 125, AMR 100 is able to approach cart 230 for docking without cart 230 intruding into an active portion of protective field 125.

At the point of time illustrated in FIG. 7, AMR 100 is in position for docking with cart 230. Loading surface 110 can contact the bottom side of top 410 and, in general, will connect thereto.

After docking, AMR 110 can disable workpiece-referenced safety field 415 and implement one or more fields that are referenced to AMR 110 itself. These field(s) need not be identical to the field(s) that were implemented previously, i.e., protective field 125 in the illustrated implementation. For example, the fields that are implemented after docking can include one or more cutouts that are akin to cutouts 420 but referenced to AMR 110 itself. The exact nature of the fields that are referenced to AMR 110 can be tailored to a variety of different parameters, including the geometry of the robot, the geometry of the workpiece, and the operation that performed with the workpiece.

If, during docking with cart 230 or other operation with a workpiece, AMR 100 detects an intrusion into safety field 415, AMR 100 can respond in a variety of different ways. For example, in some implementations, AMR 100 can stop all motion or even shut down, e.g., by implementing a hard stop. In other implementations, AMR 100 can stop only a subset of motions. The subset can be, e.g., motions that are likely to cause harm to a user or motions that are in the vicinity of the detected intrusion. In some implementations, AMR 100 can also implement a "soft stop" for all or only a subset of motions.

In some implementations, the response to detection of an intrusion can include one or more visual or audible alarms or warnings. The alarms or warnings can suffice to indicate to an individual of the intrusion. In some cases, the alarms or warnings can provide details about the location of the intrusion, such as a textual sign that indicates that an intrusion behind the workpiece has been detected.

In some implementations, the responses to detection can only be disengaged by an individual. For example, AMR 100 may require an individual to signal (e.g., manually or by a wireless communications) that operations can recommence.

Although the discussion above describes workpiece-referenced safety field 415 in the context of docking, workpiece-referenced safety fields can also be defined for a variety of other operations. One example would be undocking. For example, a workpiece-referenced safety field can be defined by AMR 110 for cart 230 during undocking to avoid a mishap, e.g., should AMR 110 strike cart 230 during undocking and either dislodge elements held on cart 230 or pull cart 230 toward an individual. As another example, during a lifting operation for a material lift, a workpiece-referenced safety field can be defined for workpieces on the lift, e.g., to ensure that they do not strike something overhead.

## Claims

1. A method performed by an autonomous mobile robot (100), the method comprising:
identifying a position of a workpiece (230) to which the autonomous mobile robot is navigating to operate on;
defining a safety field (415) that has a position referenced to the position of the workpiece, wherein the safety field is an area or a volume in which the presence of an object different than the robot triggers a safety response; and
in response to detecting the presence of an object in the safety field, triggering the safety response,
wherein the safety field includes one or more cutouts (420) defined to accommodate the geometry of the workpiece so that the workpiece itself does not trigger the safety response.

2. An autonomous mobile robot (100) comprising:
a body (105);
at least one sensor (115, 120) configured to detect aspects of the environment in the vicinity of the autonomous mobile robot; and
a control unit configured to process data received from the sensor to identify a position of a workpiece (220, 225, 230) to which the autonomous mobile robot is navigating to operate on and to define a safety field (415) that has a position referenced to the position of the workpiece, wherein the safety field is an area or a volume in which the presence of an object different than the robot triggers a safety response by the autonomous mobile robot,
wherein the safety field includes one or more cutouts (420) defined to accommodate the geometry of the workpiece so that the workpiece itself does not trigger the safety response.

3. The autonomous mobile robot of claim 2, wherein the control unit comprises a memory that stores a plurality of different definitions of safety fields, wherein the different definitions are defined for different workpieces.

4. The autonomous mobile robot of claim 3, wherein the memory stores a plurality of different definitions of safety fields for a first of the different workpieces.

5. The method or the autonomous mobile robot of any preceding claim, wherein the safety field includes one or more cutouts defined to accommodate presence of unspecified objects at positions near or around the workpiece.

6. The method or the autonomous mobile robot of any preceding claim, wherein the safety response is one of:
a stop to motion of the autonomous mobile robot; or
a visual or audible alarm; or
a visual or audible warning.

7. The method or the autonomous mobile robot of any preceding claim, wherein a size of the safety field depends upon a position of the workpiece in a facility.

8. The method or the autonomous mobile robot of any preceding claim, wherein an orientation of the safety field is referenced to an orientation of the workpiece.

9. At least one computer-readable storage medium encoded with executable instructions that, when executed by at least one processor, cause the at least one processor to perform operations comprising the method of any one of claims 1 or 5 to 8.

## Patentansprüche

1. Verfahren, das von einem autonomen mobilen Roboter (100) durchgeführt wird, wobei das Verfahren Folgendes umfasst:
Identifizieren einer Position eines Werkstücks (230), zu dem der autonome mobile Roboter navigiert, um daran betrieben zu werden;
Definieren eines Sicherheitsfeldes (415), das eine Position aufweist, die zur Position des Werkstücks referenziert ist, wobei das Sicherheitsfeld ein Bereich oder ein Volumen ist, in dem das Vorhandensein eines anderen Objekts als der Roboter eine Sicherheitsantwort auslöst; und
in Reaktion auf das Detektieren des Vorhandenseins eines Objekts im Sicherheitsfeld Auslösen der Sicherheitsantwort,
wobei das Sicherheitsfeld einen oder mehrere Ausschnitte (420) beinhaltet, die definiert sind, um die Geometrie des Werkstücks aufzunehmen, derart, dass das Werkstück selbst die Sicherheitsantwort nicht auslöst.

2. Autonomer mobiler Roboter (100), der Folgendes umfasst:
einen Körper (105);
mindestens einen Sensor (115, 120), der dazu ausgelegt ist, Aspekte der Umgebung in der Nähe des autonomen mobilen Roboters zu detektieren; und
eine Steuereinheit, die dazu ausgelegt ist, Daten zu verarbeiten, die von dem Sensor empfangen werden, um eine Position eines Werkstücks (220, 225, 230) zu identifizieren, zu der der autonome mobile Roboter navigiert, um daran betrieben zu werden, und ein Sicherheitsfeld (415) zu definieren, das eine Position aufweist, die zur Position des Werkstücks referenziert ist, wobei das Sicherheitsfeld ein Bereich oder ein Volumen ist, in dem das Vorhandensein eines anderen Objekts als der Roboter eine Sicherheitsantwort durch den autonomen mobilen Roboter auslöst,
wobei das Sicherheitsfeld einen oder mehrere Ausschnitte (420) beinhaltet, die definiert sind, um die Geometrie des Werkstücks aufzunehmen, derart, dass das Werkstück selbst die Sicherheitsantwort nicht auslöst.

3. Autonomer mobiler Roboter nach Anspruch 2, wobei die Steuereinheit einen Speicher umfasst, in dem eine Vielzahl von verschiedenen Definitionen von Sicherheitsfeldern gespeichert sind, wobei die verschiedenen Definitionen für verschiedene Werkstücke definiert sind.

4. Autonomer mobiler Roboter nach Anspruch 3, wobei im Speicher eine Vielzahl von verschiedenen Definitionen von Sicherheitsfeldern für ein erstes der verschiedenen Werkstücke gespeichert sind.

5. Verfahren oder autonomer mobiler Roboter nach einem der vorhergehenden Ansprüche, wobei das Sicherheitsfeld einen oder mehrere Ausschnitte beinhaltet, die definiert sind, um ein Vorhandensein von nicht spezifizierten Objekten in Positionen in der Nähe des Werkstücks oder um dasselbe herum aufzunehmen.

6. Verfahren oder autonomer mobiler Roboter nach einem der vorhergehenden Ansprüche, wobei die Sicherheitsantwort eines von Folgendem ist:
eine Beendigung einer Bewegung des autonomen mobilen Roboters oder
ein visueller oder akustischer Alarm oder
eine visuelle oder akustische Warnung.

7. Verfahren oder autonomer mobiler Roboter nach einem der vorhergehenden Ansprüche, wobei eine Größe des Sicherheitsfeldes von einer Position des Werkstücks in einer Anlage abhängig ist.

8. Verfahren oder autonomer mobiler Roboter nach einem der vorhergehenden Ansprüche, wobei eine Ausrichtung des Sicherheitsfeldes zu einer Ausrichtung des Werkstücks referenziert wird.

9. Mindestens ein computerlesbares Speichermedium, auf dem ausführbare Anweisungen codiert sind, die, wenn sie von mindestens einem Prozessor ausgeführt werden, den mindestens einen Prozessor veranlassen, Operationen durchzuführen, die das Verfahren nach einem der Ansprüche 1 oder 5 bis 8 umfassen.

## Revendications

1. Procédé exécuté par un robot mobile autonome (100), le procédé comprenant :
l'identification d'une position d'une pièce à travailler (230) vers laquelle le robot mobile autonome navigue pour la travailler ;
la définition d'un champ de sécurité (415) qui a une position qui renvoie à la position de la pièce à travailler, dans lequel le champ de sécurité est une surface ou un volume dans lequel la présence d'un objet différent du robot déclenche une réponse de sécurité ; et
en réponse à la détection de la présence d'un objet dans le champ de sécurité, le déclenchement de la réponse de sécurité,
dans lequel le champ de sécurité comprend une ou plusieurs découpes (420) définies pour recevoir la géométrie de la pièce à travailler de façon que la pièce à travailler elle-même ne déclenche pas la réponse de sécurité.

2. Robot mobile autonome (100) comprenant :
un corps (105) ;
au moins un capteur (115, 120) configuré pour détecter des aspects de l'environnement au voisinage du robot mobile autonome ; et
une unité de commande configurée pour traiter des données reçues depuis le capteur pour identifier une position d'une pièce à travailler (220, 225, 230) vers laquelle le robot mobile autonome navigue pour la travailler et pour définir un champ de sécurité (415) qui a une position qui renvoie à la position de la pièce à travailler, dans lequel le champ de sécurité est une surface ou un volume dans lequel la présence d'un objet différent du robot déclenche une réponse de sécurité par le robot mobile autonome,
dans lequel le champ de sécurité comprend une ou plusieurs découpes (420) définies pour recevoir la géométrie de la pièce à travailler de façon que la pièce à travailler elle-même ne déclenche pas la réponse de sécurité.

3. Robot mobile autonome selon la revendication 2, dans lequel l'unité de commande comprend une mémoire qui stocke une pluralité de définitions différentes de champs de sécurité, dans lequel les différentes définitions sont définies pour des pièces à travailler différentes.

4. Robot mobile autonome selon la revendication 3, dans lequel la mémoire stocke une pluralité de définitions différentes de champs de sécurité pour une première des différentes pièces à travailler.

5. Procédé ou robot mobile autonome selon l'une quelconque des revendications précédentes, dans lequel le champ de sécurité comprend une ou plusieurs découpes définies pour recevoir la présence d'objets non spécifiés à des positions proches ou autour de la pièce à travailler.

6. Procédé ou robot mobile autonome selon l'une quelconque des revendications précédentes, dans lequel la réponse de sécurité est l'une des réponses suivantes :
un arrêt du déplacement du robot mobile autonome ; ou
une alarme visuelle ou sonore ; ou
un avertissement visuel ou sonore.

7. Procédé ou robot mobile autonome selon l'une quelconque des revendications précédentes, dans lequel une dimension du champ de sécurité dépend d'une position de la pièce à travailler dans une installation.

8. Procédé ou robot mobile autonome selon l'une quelconque des revendications précédentes, dans lequel une orientation du champ de sécurité renvoie à une orientation de la pièce à travailler.

9. Au moins un support de stockage lisible par ordinateur codé avec des instructions exécutables qui, lorsqu'elles sont exécutées par au moins un processeur, amènent l'au moins un processeur à exécuter les opérations composant le procédé selon l'une quelconque des revendications 1 ou 5 à 8.
